# EUROPEAN PATENT SPECIFICATION

(11) **EP 2 871 978 B1**
(45) Date of publication and mention of the grant of the patent: **29.06.2016**
(21) Application number: 13729013.6
(22) Date of filing: 11.06.2013
(51) Int. Cl.: A23L 23/10, A23L 23/00, A23L 27/60, A23L 29/231, A23L 29/212

(54) **SAVOURY FOOD CONCENTRATE COMPRISING A PECTIN-STARCH GEL**
PIKANTES LEBENSMITTELKONZENTRAT ENTHALTEND EIN PEKTIN-STÄRKE-GEL
CONCENTRÉ ALIMENTAIRE GOÛTEUX CONTENANT UN GEL DE LA PECTINE ET DE L'AMIDON

(30) Priority: 13.07.2012 EP 12176415
(43) Date of publication of application: 20.05.2015
(73) Proprietor: Unilever N.V., 3013 AL Rotterdam (NL); Unilever PLC, London, Greater London EC4Y 0DY (GB)
(72) Inventor: PERRINE, Marion, Esclarmonde, 74074 Heilbronn (DE); SAILER, Winfried, 74074 Heilbronn (DE); SILVA PAES, Sabrina, NL-3133 AT Vlaardingen (NL)
(74) Representative: Tjon, Hon Kong Guno
(86) International application number: PCT/EP2013/061998
(87) International publication number: WO 2014/009079

(56) References cited:
- EP-A1- 1 283 214
- EP-A1- 2 005 838
- EP-A1- 2 227 966
- EP-A1- 2 468 110
- WO-A1-95/12323
- PICOUT D R ET AL: "Ca2+-induced gelation of low methoxy pectin in the presence of oxidised starch. Part 1. Collapse of network structure", CARBOHYDRATE POLYMERS, vol. 43, no. 2, October 2000 (2000-10), pages 113-122, XP002690446, ISSN: 0144-8617

## Description

The present invention relates to a savoury food concentrate in the form of a gel. It further relates to a process to prepare said savoury food concentrate. It further relates to the use of said savoury food concentrate for preparing a soup, a sauce, a gravy or a seasoned dish.

### Background of the invention

Concentrates for non-sweet, savoury food applications such as for example soups, sauces or gravies, which concentrates are in the form of a gel are known. They have been described in the art as alternatives for dry concentrates, for example stock cubes, and for liquid concentrates. Concentrates in the form of a gel share the advantage with dry concentrates (stock cubes) of allowing unit dosing. With liquid concentrates they share the advantage that they allow incorporation of liquid ingredients and moist containing particles. Next to this advantage, savoury concentrates in the form of a gel resemble much more the natural appearance of home-made savoury food products. Home-made ready-to-eat savoury food products like soups, sauces or gravies can traditionally be made using meat and bones. After cooling down a home-made soup or gravy, these products often tend to gel or solidify, at least in some extent, and in this way may have the appearance of a jelly, showing a smooth surface. Moreover, a further advantage of concentrates in the form of a gel, which is highly appreciated by consumers, is that the jelly appearance of a gel cues freshness, in contrast to a dry or pasty format. A gel texture is often associated with fresh food of high quality (e.g. fresh fish, liver, meat), whereas a hard or pasty texture may be associated with non-fresh products that might have dried out.

Savoury applications of particular interest are gravies, viscous soups and sauces. A thickened texture in the gravy or sauce is often appreciated by consumers. In home-made gravies this thickening effect might be reached by ingredients from the meat, like fat or proteins from the bones. It may also be reached by addition of binder materials, such as for example starch or flour, which after gelatinization of the starch shows a thickening effect in the gravy. The use of dry, instant binder granules which comprise for example starch to provide a thickened texture to a sauce or a gravy is common practice as well. Dry instant products often have an appearance which is considered non-fresh.

Several patent applications describe ambient stable savoury concentrates in the form of a gel at a high salt content.

WO2007/068484, WO2007/068482, WO2008/151850, WO2008/151851, WO08151852. These applications disclose food concentrates in the form of a gel wherein xanthan gum is combined with a galactomannan such as locust bean gum, tara gum, guar gum, or cassia gum.

WO2008/151853 describes food concentrates in the form of a gel comprising a glucomannan.

WO2007/068402, WO2007/068483 disclose products wherein a gelling system is used comprising starch and gelatin. The starch is gelatinised to contribute to the gelling system, and is required in high amounts.

WO2008/151854 describes compositions relying on a gelling system with modified starch. The modified starch is gelatinised to form the gelling system, and is required in high amounts.

WO2012/062919 discloses products with a gelling system comprising iota-carrageenan and xanthan gum.

WO2012/084843 discloses products comprising amidated low-methoxy pectin as a gelling system.

A savoury concentrate which provides a high viscosity upon dilution in hot water, such as desired when preparing a viscous sauce, a gravy, or a thickened soup has not been disclosed. It has further not disclosed how such a concentrate product should be prepared. In addition, the patent applications cited above describe several disadvantages:
The viscosity provided to the ready-to-eat product by the products described in these patent applications after dilution, is limited, if present at all. Several of these products exactly try to avoid such a thickening in the diluted, ready-to-eat product.

A specific disadvantage of the compositions containing starch as (part of) the gelling agent, describe that the starch, which is gelatinised in these cases, is required in high amounts, which limits the formulation flexibility.

Some of the references describe a very long gelation time, of up to hours or even days, before a gel texture is formed, and/or a low gelation temperature. This results in long production times. In addition, when the food concentrates remain liquid after filling in the packaging and sealing of the packaging, the seal may get spoiled. In addition, in some cases, due to low viscosity of the mixture and/or slow gelation, particles, e.g. herbs, which are present in the formulation, may sediment or float, which is not desired.

Another problem of some of the described food concentrates in the form of a gel is a relatively bad spoonability from the packaging, e.g. when the gel is quite elastic. Good spoonability is an important usage property particularly in the case of multidose formats.

Therefore, a need exists for a food concentrate in the form of a gel which is ambient stable and which comprises a high level of salt, sufficient to provide a conventional saltiness in the ready-to-eat food product resulting after dilution, and which provides a strong viscosity increase in the ready-to-eat food product resulting after dilution. The viscosity increase leads to a texture of a thickened sauce, a thickened gravy or a thickened soup. There is a need of such a product with a good spoonability from the packaging. Preferably the product shows only limited lump formation during dilution in hot water, or more preferably no lump formation at all. There is a need for such a product which is sufficiently stable during storage and transportation and which has a low risk on phase separation problems such as particle sedimentation (or floating) or syneresis. There is a need for an efficient production process to provide such a food concentrate. There is a need for such a process which is sufficiently flexible and fast to allow incorporation of high levels of starch, while still allowing high throughput volumes and wherein preferably expensive cooling devices are not required to guarantee fast and clean production.

### Summary of the invention

Surprisingly, the above mentioned problems were, at least partly, solved by a packaged food concentrate in the form of a gel, comprising
- Water,
- Sodium salt and optionally potassium salt in a total amount of from 5 wt% to 40 wt%, based on the total water content, and calculated as (weight of salt / (weight of salt + weight of total water content))*100%,
- Gelling pectin, being all pectin with a DE below 55%, wherein gelling pectin is dissolved in the water,
- Calcium salt,
- Non-gelatinised starch.

The invention further relates to a process for preparing a packaged food concentrate according to the invention, the process comprising the steps of:
a) Providing a mixture comprising water and gelling pectin, gelling pectin being all pectin with a degree of esterification of below 55%, wherein the gelling pectin is dissolvable in water,
b) Heating the mixture,
c) Cooling or allowing the mixture to cool to a temperature below the onset temperature for gelatinisation of the non-gelatinised starch in the environment of the mixture to which the non-gelatinised starch is added,
d) Adding the non-gelatinised starch after step c),
e) Adding sodium salt and optionally potassium salt,
f) Adding calcium salt,
g) Packaging,
h) Allowing the mixture to solidify,
to result in a packaged food concentrate in the form of a gel.

The invention further relates to the use of the concentrate of the present invention for preparing a soup, a sauce, a gravy or a seasoned dish, preferably for preparing a gravy.

### Detailed description of the invention

### Food concentrate

The food composition (the food concentrate) of the present invention is in the form of a semi-solid gel. Preferably, the gel is a self-sustaining gel. It is not a paste. A semi-solid gel is known to the person skilled in the art of gelled bouillon concentrates. A semi-solid gel texture allows the consumer of the food concentrate to remove the food concentrate from its packaging easily and in one piece. This is referred to in the field as unit dosing, an advantage shared with traditional, dry bouillon cubes. A semi-solid gel may allow making easy scoops for example with a spoon, which may be preferred for multi-dosage packagings. The semi-solid, preferably self-sustaining, gel texture is present at least at room temperature (20 °C). The semi-solid gel texture prevents that the food concentrate flows apart, like a liquid or a paste, after or during removal from its packaging and allows it to maintain the shape, which at least to a certain extent reflects the shape the product had when present in its packaging, in this way allowing the desired unit-dosing. The gel texture is preferably not sticky such as a paste (for example tomato paste). The gel is preferably not very elastic, to allow easy scooping with for example a spoon. In the context of the present invention at least one of the main challenges was to obtain the desired gel texture in a high-salt environment while including high amounts of non- gelatinised starch (i.e. > 10% wt on total concentrate).

The gel texture can, for example, be analysed by a texture analyser, as known in the art. The texture can be characterised for example using common techniques such as texture analysis of penetration or compression, as measured in with equipments such as a Texture Analyser (e.g. from Stable Microsystems^{™}) or a Universal testing machine (e.g. from Instron^{™}).

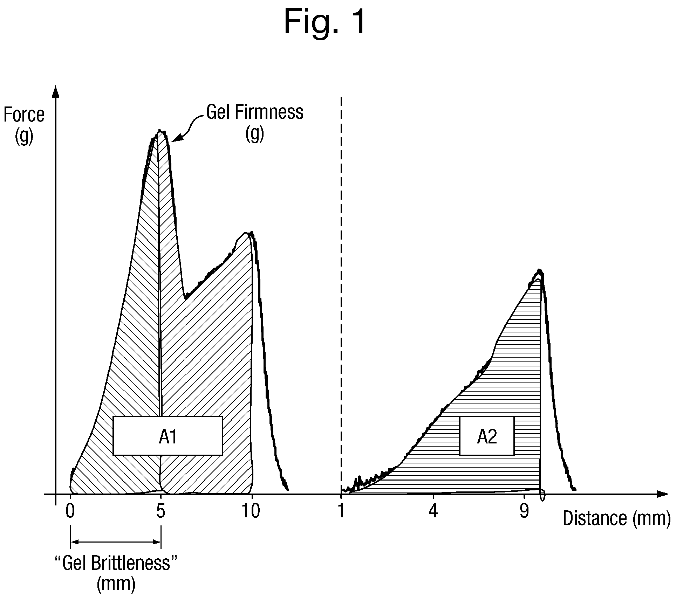

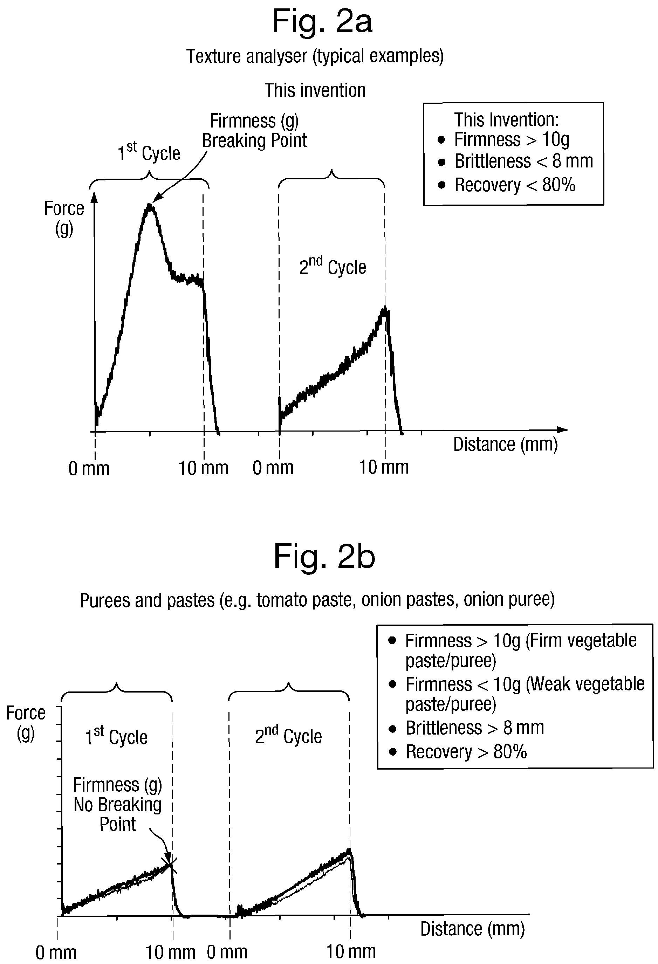

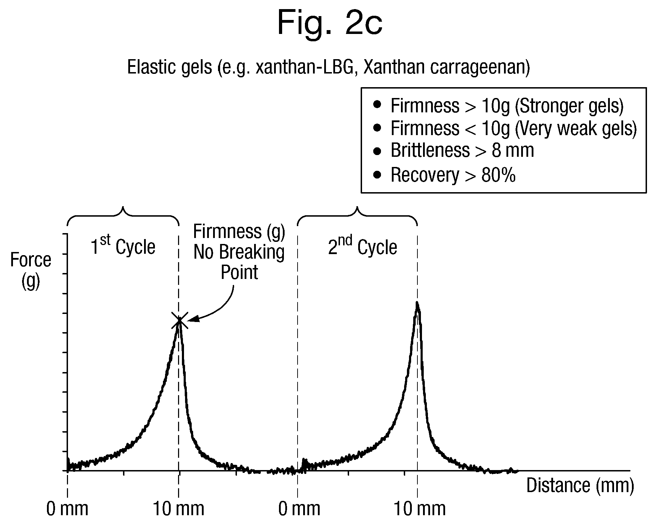

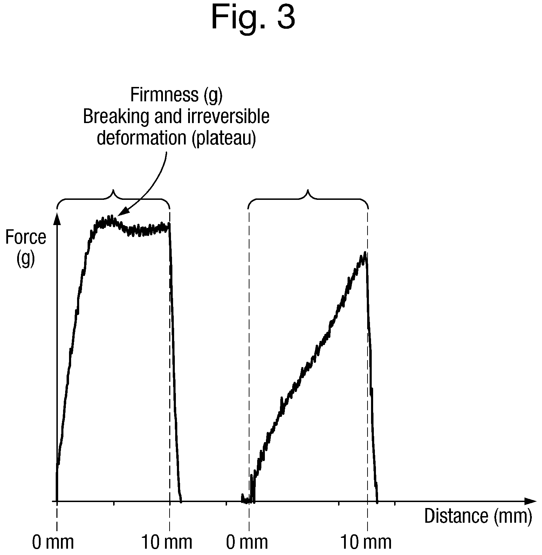

In a "penetration test", a plunger is forced into a composition and the force required for penetration of the composition is plotted against the distance (or time) of penetration into the composition at a pre-determined speed to a pre-determined depth of penetration. The plunger is then withdrawn. In the test used in the context of this invention a penetration test with two consecutive penetrations was used. If a composition is in the form of a (brittle) semi-solid gel (as preferred in this invention) it typically shows a breaking point (or irreversible deformation, e.g. yield followed by a plateau) in the first penetration, and the maximum force is reached, indicating the "product firmness". If a composition is in the form of a paste or a very elastic gel, the product firmness (maximum force) is commonly observed at the maximum distance (depth) of penetration. The area under the force versus distance curve of the first penetration defines the area in the graph A1 of Figure 1. The plunger is forced into the composition for a second time, and again the force is plotted against the distance (or time). This part of the graph defines area A2. A typical force versus distance curve resulting from this penetration test on a semi-solid gel according to the invention has been indicated in Figure 2a and compared to test curves representing purees or pastes (e.g. vegetable purees and pastes) (Figure 2b) and elastic gels which are known in the prior art (e.g. xanthan-locust bean gum gel compositions) (Figure 2c).

For this invention, the following set up is used to characterise the gel texture:
Test type: Penetration test with 2 cycles:
   a. The_measurements are performed after at least 12h maturation time after the samples are prepared and gelled (solidified). A longer maturation time of for example 24h to 48h is preferred.
   b. The samples are equilibrated to room temperature for at least 2h, prior to measurement.
   c. The machine and sample container specifications are as follows:
      - Container (125 ml propylene cup), 52 milimeters diameter
      - Sample height: at least 25 millimeters
      - Equipment: Texture Analyser Stable Microsystems (or similar)
      - Probe: 1/2 inch cylinder, smooth edges (P/0.5 - 0.5 inch diameter cylinder probe, Delrin)
      - Test set up (adapted from application notes REF: GL3/P05R, stable micro systems, Revised: March 2006). The following settings are used:
         - Load cell: 30kg
         - Compression mode, 2 cycles
         - Pre-test speed =10 millimeters/second
         - Test speed =5 millimeters/second
         - Post-test speed=10 millimeters/second
         - Trigger force = 3g
         - Penetration depth=10 millimeters (measurement error can be typically of 0.1-0.2 mm).
   d. Values of parameters below are presented as average and with a standard deviation of at least duplicates.

The following relevant parameters are used to characterise the gels according to this invention and are measured using a penetration test with 2 cycles with a texture analyser according to the method as described above:
Firmness: The food concentrate of the invention is not liquid, but has a semi-solid texture with certain firmness. The firmness is determined as the maximum force (or breaking point) in the penetration first cycle (expressed in g). For a semi-solid gel as in this invention, the maximum force (firmness) is typically observed as a breaking point before complete penetration depth (distance is less than the penetration dept, which is 10mm). In the concentrate of the present invention, the firmness (in g) is preferably higher 25 g, more preferably higher than 28 g, even more preferably higher than 30 g, most preferably higher than 35 g. The firmness is preferably less than 1000 g, more preferably less than 700 g, even more preferably less than 600 g.
Brittleness: Gels of the invention are preferably brittle gels. It is preferred that the gels have a certain brittleness so they are easier to spoon and easy to disperse in the application. Brittleness is defined, for the purpose of this invention, as the distance of penetration until the maximum force is achieved (in millimeters) in the first penetration. For a semi-solid gel as in the present invention (i.e. brittle gels), that is typically observed at a breaking point, at a distance (in millimeters) less than the penetration depth defined (10 mm). This is illustrated in Figure 2a. Contrary to a semi-solid gel, a paste may be too sticky and is not brittle, it does not break. This is illustrated in Figure 2b. An elastic gel might also not break within the penetration depth imposed in the test (10mm). This is illustrated in Figure 2c. The gel of the invention is preferably not an elastic gel.
   In the concentrate of the present invention the brittleness is preferably less than 9 millimeters, more preferably less than 8 millimeters, even more preferably less than 7 millimeters.
Recovery: The recovery of the composition is expressed as the ratio A2/A1: The ratio between A2/A1 is considered as a measure for the cohesiveness of the composition, i.e. is a measure of how well the product withstands a second deformation relative to how it behaved under the first deformation. The recovery is preferably less than 80%, more preferably less than 70%, even more preferably less than 60%.In general, semi-solid (brittle) gels as in this invention show a lower recovery value than very elastic gels, liquids, purees and pastes, as they break in the first cycle (i.e. breaking point is observed in the first cycle at a distance below 10 mm).

The present invention relates to a food concentrate. A concentrate is a food product that is usually diluted before consumption. In this way, it should be discriminated from a read-to-eat product, which is normally consumed as such, without dilution. To enable dilution of the concentrate of the present invention, the concentrate should be dispersed in hot water, preferably at for example 95 °C, more preferably at for example 80 °C . Preferably a concentrate according to the present invention with a size of 25 g disperses in 250 ml water of 80°C, using stirring, e.g. by using a wire whisk, in a time period of less than 4 minutes, more preferably less than 3 minutes, most preferably less than 2 minutes. This is the way a consumer would normally use the product of the invention. As the concentrate of the present invention is a concentrated product, it should allow dilution of between 2 to 40 times, preferably of between 4 and 20 times, more preferably of between 5 and 12 times, based on the weight of the product. Higher dilution ratios are not preferred, as they may require a higher salt content and a higher starch content in the concentrated product, which as a consequence might compromise its gel texture and even turn the concentrate into a paste.

### Water

The food concentrate according to the invention comprises water. Water is preferably present in a total amount of from 30 wt% to 70 wt%. More preferably water is present in an amount of from 32 wt% to 65 wt%, more preferably of from 34 wt% to 60 wt%, it can be present in an amount of from 36 wt% to 55 wt%. Water is representing here the total water content of the food concentrate.

The water activity of the product is preferably of between 0.60 and 0.95, more preferably of between 0.65 and 0.90 even more preferably between 0.70 and 0.90, even more preferably between 0.75 and 0.85. The Aw can preferably be between 0.6 and 0.8.

### Salt

The food concentrate according to the present invention is a concentrate product that can be used as to prepare for example a soup, a sauce, a gravy or a seasoned dish. Generally, such a product is diluted, for example in water, or in a dish, for example in a liquid dish or a in sauce or in a vegetable dish or a rice dish, to obtain a food product which is ready for consumption. Inherently, the concentrate food composition according to the invention comprises a high salt content, to allow the conventional relatively high dilution factors, while maintaining a proper taste impact. To this end, the food concentrate according to the invention preferably comprises sodium salt (preferably NaCl) and optionally potassium salt (preferably KCI) in a total amount of from 5 wt% to 40 wt% , more preferably of from 7 wt% to 35 wt%, even more preferably of from 10 wt% to 35 wt%, even more preferably of from 15 wt% to 30 wt%, most preferably of from 20 to 26 wt%, based on the total water content of the concentrate food composition. The amount of salt is calculated as standard in the art, and is according to the following formula: ((weight of salt) / (weight of salt + weight of total water content)) *100. For example 5 g salt in 20 g total water content results in an amount of salt of 20 wt% on total water content. When preparing the concentrate food composition of the invention, this amount of salt can be added during preparation. The same formula is used, mutatis mutandis, for calculating other ingredients the amount of which is described as based on the total water content, such as for example gelling pectin.
Sodium salt, preferably NaCl, is preferably present in an amount of from 5 wt% to 40 wt%, preferably of from 7 wt% to 35 wt%, even more preferably of from 10 to 35 wt%, even more preferably of from 15 to 30 wt%, most preferably of from 20 to 26 wt% based on the total water content of the concentrate food composition..

It might be preferred that in addition to sodium salt, preferably NaCl, the food concentrate comprises a potassium salt (preferably KCI). The presence of potassium ions in combination with sodium ions, preferably at specific ratios in the food concentrate results in firmer gels compared to the situation when only Na⁺ cations or K⁺ cations are present. This is even the more surprising, since general knowledge suggests a reduction in gel strength at extreme salt levels (higher than 5 %wt based on the total water content), for both Na⁺ and K⁺ cations. By the use of potassium salt, gels were formed more easily in the context of this invention, using high levels of non-gelatinised starch, while maintaining the gel structure. Alternatively, the gelling pectin level can be reduced, which might be attractive from a cost perspective.

To this end, especially when potassium salt is present in the composition, sodium salt, preferably NaCl, is preferably present in an amount of from 4 to 35 wt%, more preferably of from 4.5 to 30 wt%, even more preferably of from 5 to 25 wt%, most preferably of from 7 to 23wt%, based on the total water content.

The ratio of Na⁺ cations to the total amount of Na⁺ cations and K⁺ cations taken together, i.e. the ratio [Na⁺cations/(Na⁺ cations + K⁺ cations)], or for simplicity, (Na⁺/(Na⁺+K⁺))*100 (expressed in %) in the concentrate food composition according the invention is preferably of from 15 wt% to 95 wt%, more preferably from 35 wt% to 93 wt%, more preferably of from 40 wt% to 92 wt %, even more preferably of from 45 wt% to 90 wt %, most preferably from 50 wt% to 85 wt%. These ratios resulted in most significant effects on gel formation and advantages indicated above.

The food concentrate preferably comprises potassium salt. Most preferably, the potassium salt comprises KCI. Potassium salt, preferably KCI is preferably present in an amount of from 0.6 to 20 wt%, more preferably of from 0.8 wt% to 19 wt%, even more preferably of from 1 wt% to 17 wt%, most preferably of from 1.5 wt% to 15 wt%, based on the total water content of the concentrate.
These amounts are preferably present to result in a ratio of [(Na⁺/(Na⁺+K⁺))*100] of from 15 wt% to 95 wt% in the final food concentrate composition. Therefore the invention preferably relates to a food concentrate wherein potassium salt, preferably KCI, is present in an amount of from 0.6 to 20 wt%, based on the total water content of the concentrate, and calculated as (weight of salt / (weight of salt + weight of total water content))*100%, and Na⁺ ions and K⁺ ions are present in a ratio of [(Na⁺/(Na⁺+K⁺))*100] of from 15 wt% to 95 wt%.

Na⁺ cations are preferably present in an amount of from 1.5 wt% to 15 wt%, more preferably in an amount of from 1.7 wt% to 12 wt%, even more preferably in an amount of from 2 wt% to 11 wt%, most preferably from 2.5 wt% to 10 wt% based on the total water content of the food concentrate composition.

K⁺ cations are preferably present in an amount of from 0.3 wt% to 13 wt%, more preferably in an amount of from 0.4 wt% to 10 wt%, even more preferably in an amount of from 0.5 wt% to 9 wt%, most preferably from 0.8 wt% to 8 wt% based on the total water content of the food concentrate composition.

### Calcium salt

The food concentrate of the present invention further comprises calcium salt. This provides calcium cations (Ca²⁺). Calcium salt might for example be derived from added crystalline salt or, at least partly, from ingredients comprising calcium, like dairy products. Preferably the food concentrate according to the invention comprises Ca²⁺ in an amount of from 0.01 wt% to 3 wt% Ca²⁺, more preferably from 0.02 wt% to 2 wt% Ca²⁺, even more preferably from 0.03 wt% to 1.5 wt% Ca²⁺, most preferably from 0.04 wt% to 1 wt% Ca²⁺ based on the total water content of the concentrate. The calcium salt is preferably present in an amount to provide these preferred amounts of Ca²⁺ cations in the concentrate of the invention.

Preferably the food concentrate according to the invention comprises Ca²⁺ in an amount of from 10 to 2000 mg Ca²⁺/g of gelling pectin, more preferably from 15 to 1000 mg Ca²⁺/g of gelling pectin, even more preferably from 20 to 800 mg Ca²⁺/g of gelling pectin, most preferably from between 30 to 400 mg Ca²⁺/g of gelling pectin (as defined below) and dissolved in the water of the food concentrate. It might be preferred that the invention comprises Ca²⁺ in an amount of from 100-300 mg Ca²⁺/g of gelling pectin (as defined below) and dissolved in the water of the food concentrate.

### Gelling pectin

According to the invention, the food concentrate comprises gelling pectin. Pectin is a substance which is present in the cell wall of plants. Pectin is used as a thickening and gelling agent, and is known in the food industry to provide structure in fruit and vegetable compositions.

Pectic substances are complex heteropolymers originating from plant tissue. Pectin consist predominantly of a-D galacturonic acid units, but also contains some amount of neutral sugars such as rhamnose, xylose, arabinose, galactose and gulose. For the purpose of this invention "pectin" is expressed as "galacturonic acid", and accordingly, we define the "pectin content" in a food formulation as the weight percentage of galacturonic acid (GalA) based on the total water content of the composition. The pectin content can be determined by methods known in the art, such as for example the Saeman hydrolysis method (Englyst and Cummings (Analyst, 109(7), 937-942 (1984), Filisetti-Cozzi and Carpita (Analytical Biochemistry, 197, 157-162 (1991)).

The carboxyl groups at the sixth carbon of each galacturonic acid unit may be esterified by a methyl group or may exist as unesterified free carboxyl group. The percentage of esterified galacturonic acid units relative to the total number of galacturonic acid units in a pectin polymer is called the degree of esterification (DE). The degree of esterification can be determined according to methods known in the art, such as the base titration method (Shultz, 1965) as proposed by the Food Chemical Codex (FCC (1981). 3rd ed., (1981) National Academy of Science, Washington, DC), quantification of methanol released during de-esterification using gas chromatography (GC) (Walter et al. (1983), Journal of Food Science, 48: 1006-10070), colorimetry (Hou et al. (1999), Botanical Bulletin of Academia Sincia, 40:115-119), high performance liquid chromatography (HPLC) (Levigne S., et al. (2002), Food Hydrocolloids 16: 547-550), nuclear magnetic resonance (NMR) (Rosenbohm et al. (2003) Carbohydrate Research, 338: 637-649) and capillary zone electrophoresis (CZE) (Williams et al. (2003), Journal of Agricultural Food and Chemistry, 51: 1777-1781).

The DE resulting from such a determination is usually expressed as an average degree of esterification to account for the differences in DE of the individual polymers in a formulation. The average degree of esterification (DE) is often used to classify pectin according to physical characteristics like the ability to form gels in the presence of divalent cations like calcium. In this context the term "Low methoxyl pectin" is often used for pectins with a low degree of esterification that can be induced to form gels in the presence of calcium, while the term "High methoxyl pectin" describes pectins that don't gel in the presence of calcium due to their high content of methoxyl ester groups.

Compositions of the current invention may contain plant material such as for example fruit or vegetable pieces and purees, which are a source of pectin present in the formulation. This pectin may have a variety of different average DE, potentially leading to a broad and heterogeneous DE distribution which makes the use of an average DE to characterise the pectin in the invention unpractical. It was found, that in the context of the present invention, i.e. in high-salt food concentrates, it is the pectin with a DE of lower than 55 % that contributes to the desired texture of a semi-solid gel. Therefore, for the purpose of this invention we define as "gelling pectin" all pectin with a DE below 55%. Preferably the DE is of below 50% even more preferably below 45%, most preferably the DE is below 40%. A method to separate pectin into fractions with different DE is described, for example, by Strom, et al. (2005), Carbohydrate Polymers, Volume 60, Issue 4, 20 June 2005, Pages 467-473.

Gelling pectin is present in an effective amount, i.e. to provide a food concentrate in the form of a semi-solid gel. As conceivable for the skilled person, to provide the texture according to the invention, the gelling pectin is dissolved gelling pectin, i.e. dissolved in the water of the food concentrate of the invention. Preferably, the amount of gelling pectin, dissolved in the water of the food concentrate composition, is of between 0.7 wt% and 10 wt%, more preferably of between 0.9 wt% and 6 wt%, even more preferably between 1.0 wt% and 5 wt%, even more preferably between 1.1 wt% and 4 wt%, most preferably between 1.5 wt% and 3.5 wt%, based on the total water content. This amount is to be calculated as common in the art, according to the following formula ((weight of galacturonic acid)/(weight of galacturonic acid + weight of total water content))*100%. As indicated, the DE of the gelling pectin is lower than 55%. Preferably, the DE of the gelling pectin is lower than 50%, preferably of lower than 45%, more preferably of lower than 40%, most preferably the DE is lower than 30%.

It was found that relatively high salt levels are preferably combined with relatively high pectin levels, for optimal stability during storage and transport. For a sodium salt content of higher than 20 wt% on total water content, the amount of gelling pectin, with a DE below 55% as defined above, is preferably of between 1.3 wt% and 10 wt%, more preferably of between 1.4 wt% and 5 wt%, even more preferably between 1.5 wt% and 4 wt%, most preferably between 1.5 wt% and 3.5 wt%, expressed as galacturonic acid content based on the total water content of the food concentrate.

For a sodium salt content of higher than 10 wt% on total water content, the amount of gelling pectin, with a DE below 55% as defined above, is preferably of between 0.8 wt% and 10 wt%, more preferably of between 0.9 wt% and 5 wt%, even more preferably between 1.0 wt% and 4 wt%, most preferably between 1.2 wt% and 3 wt%, expressed as galacturonic acid content based on the total water content of the food concentrate.

It could be preferred in the present invention that the gelling pectin is non-amidated pectin. Amidated low methoxyl pectins differ from non-amidated low methoxyl pectins by the presence of a number of amide groups in the pectin molecule, partially substituting methyl ester groups. Legislation limits the degree of amidation to 25%. It is preferred that the amidation level in the gelling pectin is lower than 20%, preferably below 10%. Most preferably, the gelling pectin is non-amidated pectin. It was observed that non-amidated pectin gave better results than amidated pectin in some cases. Non-amidated pectin provides the additional advantage that the price is lower. It has a more natural appearance for the consumer.

### Starch

According to the present invention, the concentrate in the form of a gel comprises non-gelatinised starch. Preferably, the concentrate comprises non- gelatinised starch in an amount of from 10 to 50 wt%, based on the weight of the total concentrate, without packaging. The non-gelatinised starch results in the viscosity increasing effect upon dilution in hot liquid. The amount of non-gelatinised starch is preferably more than 15 wt%, more preferably more than 20 wt%, most preferably more than 25% and is preferably less than 40 wt%, more preferably less than 38 wt%, more preferably less than 35wt%, based on the weight of the total concentrate. The amount of non-gelatinised starch can be preferably from 15 to 40 wt%, more preferably of from 20 to 38 wt%, most preferably from 20 to 30 wt%, based on the weight of the total concentrate. Within the preferred range, especially in the range of from 20 to 30wt% the effect of the present invention is optimal. Although starch may contain some water, in the present invention the amounts of starch are calculated as dry matter of starch.

To provide the desired binding effect while still providing the desired saltiness upon dilution, the ratio of non-gelatinised starch to salt is preferably between 0.8:1 and 10:1, more preferably of between 1:1 and 8:1, even more preferred between 1.5:1 and 6:1, most preferred between 2:1 and 4:1.
This ratio should be interpreted that at relatively high salt levels, the lower ratio's may be preferred (for example 1:1), whereas at lower salt levels, the high ratio's might be preferred used.

Non-gelatinised starch can be both native starch or modified starch or a mixture thereof. Modified starch preferably is physically or chemically modified starch. Non-gelatinised starch is also described in literature as "unswollen starch". The non-gelatinised starch is in general composed of crystalline parts of amylopectin and amorphous amylose characterized by a birefringence, when seen under polarized light microscopy. When gelatinization occurs, starch granules gradually lose their birefringence, due to the disruption of their crystalline structure. This technique is well-known to the skilled person. Other techniques known in the art such as differential scanning calorimetry (DSC) or X-ray powder diffraction can also be used to analyse whether the starch is gelatinised or non-gelatinised.
Pre gelatinised starch or flour would result in thick paste and impair dispersibility. Preferably, non-gelatinised starch in the context of the present invention is selected from the group consisting of wheat starch, potato starch, tapioca starch, corn starch, pulses starch, rice starch, sago starch, cassava starch, yarn starch, arrow root starch, and mixtures thereof. More preferably, the starch is one of the starches selected from the group consisting of cassava starch, corn starch, sago starch, potato starch, arrow root starch and mixtures thereof. The starch can also be added in the form of flour. It is an advantage of the present invention that a broad range of starch types can be used, which have their own range of respective gelatinization temperatures, including the starches with a low gelatinization temperature.
The starch is preferable a starch with a water activity (of the starch powder) in the range of from 0.45 to 0.65, more preferably of from 0.5 to 0.6, to avoid mass transfer from gel matrix to starch which may detriment the gel structure.

The non-gelatinised starch can be present in the form of a fine powder or in the form of more coarse particles such as for example agglomerates or pearls comprising non-gelatinised starch and/or flour. Preferably, the non-gelatinised starch is homogenously dispersed in the food concentrate. The non-gelatinised starch and flour is preferably present in particles with a particle size of more than 1µm, preferably of more than 5 µm, and preferably less than 5 mm, more preferably less than 3 mm, even more preferably less than 1 mm and most preferably less than 200 µm. Relatively large starch granules or agglomerates of starch granules may provide the advantage that the exchange surface between starch particles and the gel matrix is lowered, which may contribute to a more stabilized gel structure. When a relatively high starch content is desired, the use of starch which is at least partly in the form of agglomerates might be preferred. The use of relatively large starch particles, like agglomerates, may require an adapted production process, to keep the particles intact during production of the concentrate. It may be preferred to coat the relatively large particles, such as agglomerates, for example by fat, to maintain their integrity during processing.

### Other ingredients

### Savoury taste enhancer

To contribute to the savoury character, the concentrate food composition of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1wt% to 25 wt%, most preferably in an amount of from 5wt% to15 wt%, based on the weight of the total food concentrate. An individual taste enhancer as mentioned above may be present in an amount of less than 30 wt%, more preferably of between 0.1 wt% and 30 wt%, preferably in an amount of from 0.5 wt% to 25 wt%, most preferably in an amount of from 1 wt% to15 wt%, based on the weight of the total food concentrate.

### Taste imparting components

In the concentrates according to the invention, it is preferred that taste-imparting components are present. They may comprise one or more of yeast extract; hydrolyzed proteins of vegetables-, soy-, fish-, or meat-origin, liquid or dissolvable extracts or concentrates selected from the group consisting of meat, fish, crustaceans, herbs, fruit, vegetable and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, chicken (and other fowl). Preferably the plant pieces comprise pieces selected from the group consisting of onion, garlic, leek, carrot, parsley, tomato and mixtures thereof. Preferably the amount of taste-imparting components as set out above is from 1 wt% to 30 wt% (by weight on the total concentrate). More preferred from 2 wt% to 20 wt%, even more preferably from 5wt% to 10%.
Preferably, the amount of particles, preferably particles selected from the group of particles of meat, particles of fish, particles of crustaceans, particles of plant (e.g. herbs, vegetable, fruit), particle of fungi (e.g. mushroom) and mixtures thereof is from 0.5 wt% to 30 wt%, more preferably from 1 wt% to 20 wt%, even more preferably from 2 wt% to 10 wt% (by weight on the total food concentrate).
It is an advantage of the present invention that during production of the concentrate food composition sedimentation or floating of particles, floating of particles on top of the mixture or phase separation, e.g. according to a gradient, between a phase with a higher concentration of particles and a phase with a lower concentration of particles can be prevented, without the need of additional gums such as galactomannans or xanthan. It can be preferred that the total amount of galactomannan and xanthan is very low, for example less than 0.2 wt%, more preferably less than 0.1 wt%, based on the weight of the total water content. Presence of these gums might be perceived as non-favorable by consumers.

### Fat

Fat may be present in the food concentrate according to the present invention in relatively low amounts. Fat can be liquid fat or solid fat, at ambient temperature, such as for example at 20 °C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may affect the desired gel texture, and therefore are not preferred. Relatively high amounts of liquid fat, such as for example oils which are liquid at room temperature, may have a weakening effect on the texture of the gel. Hence, preferably, the present invention relates to a food concentrate further comprising less than 15 wt% of fat, preferably less than 10 wt% of fat. In another preferred aspect, fat may be present in an amount of from 0.5 to 15 wt% of fat, more preferably of from 1 to 10wt% of fat, most preferably of from 3 to 10 wt% of fat, based on the weight of the food concentrate. The amount of fat in the food concentrate is preferably as low as possible, for optimal stability. It may be preferred that fat is absent.

The food concentrate of the invention is a savoury food concentrate. Consequently, after dilution, the resulting product does preferably taste not sweet. The sugar content in the concentrate according to the invention is preferably lower than 50 wt%, more preferably lower than 40 wt%, even more preferably lower than 30 wt%, more preferably lower than 15 wt%, most preferably lower and 10 wt%. It can be more than 1 %, preferably more than 5 wt% based on the total weight of the concentrate. A suitable range could be of between 1 and 20 wt%, preferably of from 3 to 15 wt% based on the total weight of the concentrate. It may be preferred that the food concentrate is free from sugar or free from any added sugar.

Sugar polyols could also provide a sweet taste to the product resulting after dilution. The consumer may not appreciate the presence of these compounds. Therefore, it could be preferred that the concentration of sugar polyols, for example liquid sugar polyols, is preferably less than 3 wt%, preferably less than 1 wt%, more preferably less than 0.5 wt%, even more preferably less than 0.1 wt%, or less than 0.05 wt% based on the weight of the food concentrate. It could be preferred that the food concentrate does not contain any added sugar polyol or added liquid sugar polyol.

### Preservatives

It might be preferred that the food concentrate of the present invention comprises microbiological active ingredients, like preservatives or acids. Preservatives or acids may be for example lactic acids, potassium sorbate or benzoate.

### Weight

The weight of the concentrate in the form of a gel according to the present invention is preferably more than 2 g, preferably more than 10 g, even more preferably more than 20 g, most preferably higher than 25 g and preferably less than 10 kg, more preferably less than 1 kg, even more preferably less than 500 g, even more preferably less than 300 g, even more preferably less than 100 g, most preferably less than 50 g. Concentrates with a size of from 2 g to 300 g, preferably of from 10 g to 100 g, most preferably of from 20 g to 50 g are in particular suitable for, but not limited to, unit dosing and are preferably designed for single use. The relatively small formats showed optimal dispersion behavior, and reduced risk for lump formation.
The concentrate can also be a multi-dosing format, although the format is not limited to this. In this case the consumer can disperse only part of the concentrate of the invention in an appropriate amount of liquid, by for example using a spoon or other suitable utensil. In case of a multi-dose format, the weight of the concentrate can preferably be from 80 g to 1 kg, more preferably from 100 g to 850 g.

### pH

The pH of the food concentrate of the invention (at room temperature, e.g. 20 °C and measured after at least one day of preparation) is preferably between 1 and 7, more preferably between 2 and 6. The pH is preferably higher than 3.5, preferably between 3.5 and than 7, more preferably higher than 3.8, more preferably between 3.8 and 6, even more preferably higher than 4.0, even more preferably between 4.0 and 5.5. It could be preferred that the gelled food concentrate has a pH of lower than 3.5. The pH can be adjusted by edible acids or base, as known in the art, and adjustment is preferably carried out after addition of the non-gelatinised starch.

Preferably the packaged savoury food concentrate according to the invention is a concentrate for a soup, a sauce or a gravy, preferably for a viscous sauce or a viscous gravy.

### Process

It turned out that the conventional processes as described in the art are not suitable to prepare the product of the invention. In a further aspect, the invention relates to a process for preparing a packaged savoury food concentrate in the form of a gel, the process comprising the steps of:
a) Providing a mixture comprising water and gelling pectin, gelling pectin being all pectin with a degree of esterification of below 55%, wherein the gelling pectin is dissolvable in water,
b) Heating the mixture,
c) Cooling or allowing the mixture to cool to a temperature below the onset temperature for gelatinisation of the non-gelatinised starch in the environment of the mixture to which the non-gelatinised starch is added.
d) Adding the non-gelatinised starch after step c),
e) Adding sodium salt and optionally potassium salt,
f) Adding calcium salt,
g) Packaging,
h) Allowing the mixture to solidify,
to result in a packaged food concentrate in the form of a gel.

### a) Mixing gelling pectin and water

In a first step a), a mixture is provided comprising water and gelling pectin, wherein gelling pectin is construed as the total amount of pectin with a DE below 55%. The gelling pectin can be added as a pectin powder, which comprises gelling pectin, and can be commercially bought, for example LM pectin LC 810 from Danisco.

### b) Heating the mixture

Step b) comprises heating the mixture resulting from step a) to result in a homogenous solution. Heating activates the pectin and contributes to dissolution of pectin. Heating is preferably carried out up to a temperature of the mixture of between 70°C and 95 °C, preferably of between 75°C and 90 °C.

### c) Cooling or allowing to cool the mixture

The mixture resulting from step b) is cooled or allowed to cool to a temperature that is lower than the onset temperature for gelatinisation of the starch to be used, and which onset temperature for gelatinisation applies for the mixture to which the starch will be added. This onset temperature for gelatinisation can differ from the onset temperature for gelatinisation as mentioned by a supplier, as the presence of e.g. salts and sugars can influence the onset temperature for gelatinisation. The temperature for addition of non-gelatinised starch can be easily determined by a person skilled in the art, taking into consideration the other ingredients in the specific formulation (to which the non-gelatinised starch will be added), which might influence the onset temperature for gelatinisation of the starch (e.g. salts and sugars). This can be checked in a simple empirical test. Alternatively, differential scanning calorimetry (DSC), for example can be used to determine the gelatinization temperature. Preferably, the temperature of the mixture should not be higher than the gelatinization temperature of the starch, as this may compromise mixing of the starch into the mixture, or could even destroy the gel texture to be formed. It can be preferred that cooling is carried out to a temperature of the mixture of below 60°C, preferably of below 55°C, even more preferably of below 50 °C, even more preferably of below 45 °C. The temperature of the mixture is preferably above 20 °C, more preferably above 25 °C, even more preferably above 30 °C.
Cooling might be carried out by a cooling device like a tube-in-tube heat exchanger, as known in the art, but might also be suitably done by allowing the mixture to cool in the processing vessel.

### d) Adding non-gelatinised starch

In step d) the non-gelatinised starch is added to the mixture. This is done by mixing the non-gelatinised starch into the mixture resulting from cooling step c), so, step d) is carried out after step c), preferably by a mixing device.
The non-gelatinised starch is added at a temperature of the mixture which is lower than the onset temperature for gelatinisation of the chosen starch (or starches) in the specific formulation the starch is added. This temperature can be easily determined by a person's skilled in the art. Depending on the starch that is used and the composition (e.g. salts, sugar concentration), the temperature might preferably be higher than 20 °C, more preferably higher than 25 °C, even more preferably higher than 30 °C, and preferably lower than 60 °C, more preferably lower than 55 °C, even more preferably lower than 50 °C.

When a binder such as starch is used in a production process described in the art, production resulted in a dramatic increase of viscosity, making processing very difficult or impossible. Furthermore, the gel structure of the resulting food concentrate and its dispersion properties are compromised and the resulting product doesn't allow the necessary increase of viscosity during the preparation of the ready-to-eat food product. That is a problem because for products such as gravies and sauces, it is desired that the starch keeps its native properties (i.e. non-gelatinised state) in the concentrate so it thickens the product only after dilution and during cooking by the consumer. The process of the invention preferably does not contain a sterilization step or a pasteurization step, to protect the properties of the non-gelatinised starch.

It is an advantage of this invention that the temperature for the addition of starch is almost entirely is determined by the starch chosen and is does not depend on the gelling temperature of the gelling agent, in this case gelling pectin, since the gelation is not determined by the gelling temperature only, but depends on the calcium addition step as well. Calcium can be added, for example after the starch addition. Therefore the process-flexibility is greatly increased compared to gelation processes known in the art wherein the gelling is dependent only on the gelling temperature. The temperature window normally defined by the gelation temperature of the gelling agent (i.e. gelling pectin) and the onset temperature for gelatinisation of the starch is significantly extended (to lower temperatures). This results in a production process which requires less temperature control restrictions between the moment of incorporation of starch in the mixture and filling of the mixture in the packaging, which allows for more flexibility on the production line.

It is preferred that the heat transfer medium in the production apparatus does not have a temperature higher than the gelatinization temperature of the starch. The preferred heat transfer medium is water and preferably not steam, to prevent hot spots.

### e) Adding salt

Step e) comprises adding sodium salt, preferably NaCI, and optionally potassium salt, preferably KCI, to the mixture. These salts (sodium salt, optionally potassium salt, but not including calcium salt) can be added before, during or after the heating step of step b). The sodium salt and optionally potassium salt is preferably added before adding the starch (step d). Preferably, the sodium salt and optionally potassium salt is added after step b), which in the context of the invention resulted in gels with a better texture. Sodium salt and optionally potassium salt are preferably added in a total amount of from 5 to 40 wt%, more preferably in a total amount of from 7 wt% to 35 wt%, even more preferably in an amount of from 10 wt% to 35 wt%, even more preferably in an amount of from 15 wt% to 30 wt%, most preferably from 20 wt% to 26 wt% based on the total water content of the final resulting food concentrate. Therefore, step e) of the process of the invention preferably comprises the step of adding sodium salt and optionally potassium salt (before, during or after step b) in a total amount of from 5 wt% to 40 wt% (based on the total water content of the resulting food concentrate).

The Na salt preferably comprises NaCI. The K salt preferably comprises KCI. Na salt, preferably NaCI, is preferably added in an amount of from 4 wt% to 35 wt%, more preferably of from 4.5 wt% to 30 wt%, even more preferably of from 5 wt% to 25 wt%, most preferably of from 7 wt% to 23 wt%, based on the total water content of the food concentrate.

The food concentrate will comprise preferably Na⁺ cations. Na⁺ cations, preferably in the form of NaCI, are preferably added in an amount of from 1.5 wt% to 15 wt%, more preferably in an amount of from 1.7 wt% to 12 wt%, even more preferably in an amount of from 2 wt% to 11 wt%, most preferably from 2.5 to 10% based on the total water content of the concentrate food composition.

K salt, preferably KCI, is preferably added in an amount of from 0.6 to 20 wt%, more preferably of from 0.8 to 19 wt%, even more preferably of from 1 to 17 wt%, most preferably of from 1.5 to 15 wt%, based on the total water content of the food concentrate.

The concentrate preferably comprises preferably K⁺ cations. K⁺ cations, preferably in the form of KCI, are preferably added in an amount of from 0.3 wt% to 13 wt%, more preferably in an amount of from 0.4 wt% to 10 wt%, even more preferably in an amount of from 0.5 wt% to 9 wt%, most preferably from 0.8 to 8 wt% based on the total water content of the concentrate.

Preferably, Na salt and K salt are added in amounts to obtain a weight ratio of (Na⁺(Na⁺+K⁺))*100 (in %) of from 15 to 95% , more preferably from 35 to 93%, even more preferably from 40 to 92%, even more preferably from 45 to 90%, most preferably of from 50 to 85%, in the final resulting concentrate. This ratio is calculated, for example as following:

| e.g. in 75 g of water | | Ratio: (Na⁺/(Na⁺+K⁺))^{*}100 (in %) |
|---|---|---|
| NaCl(g)=20 | Na⁺cations=7.9 (g) | 75% |
| KCI(g)=5 | K⁺ cations =2.6(g) | |
| | Na⁺ cations +K⁺ cations =10.5(g) | |

It is noted that the salt can be present in an amount which is higher than the saturation point of the salt. In this case, salt crystals may appear e.g. at the surface of the resulting concentrate.

### f) adding calcium salt

The moment calcium salt is added to the mixture is relevant. Calcium salt is added in step f). Adding calcium salt can be carried out during step c) (cooling the mixture), more preferably during or after step d (addition of starch), or after packaging step g). Most preferably calcium salt is added in step d) or after step d). Preferably Ca²⁺ cations are added in an amount of from 0.01 wt% to 3 wt% *Ca²⁺, more preferably from 0.02 wt% to 2 wt% Ca²⁺, even more preferably from 0.03 wt% to 1.5 wt% Ca²⁺, most preferably from 0.04 wt% to 1 wt% Ca²⁺ based on the total water content of the resulting food concentrate. Calcium salt is preferably added in an amount to provide these amounts of Ca²⁺ cations in the resulting concentrate food concentrate of the invention. Calcium salt can be added for example as crystalline salt, but also, at least partly, by ingredients containing calcium salt, possibly in dissolved form.

Preferably Ca²⁺ cations are added in an amount of from 10 to 2000 mg Ca²⁺/g of gelling pectin, more preferably from 15 to 1000 mg Ca²⁺/g of gelling pectin, even more preferably from 20 to 800 mg Ca²⁺/g of gelling pectin, most preferably between 30-400 mg Ca²⁺/g of gelling pectin. It might be preferred that Ca²⁺ is added in an amount of from 100-300 mg Ca²⁺/g of gelling pectin.

Counter-intuitively, in the context of the invention, the process flexibility could be increased as the moment of gelation could be controlled by the addition of the calcium salt. The calcium ions can be added, for example, after (or at the same time) of the addition of the non-gelatinised starch. In this way, the moment of gelling can be controlled to need, by the addition of calcium salt, independent from the temperature. This is the more surprising since low methoxyl pectins are in general very calcium sensitive and, in low salt environment, immediately gel when calcium is added, and for example, lumps can be formed.

### Addition of other ingredients

The process may further comprise the step of addition of taste imparting components and/or savoury taste enhancer. This step may comprise adding vegetable pieces, fruit pieces, herb pieces, meat pieces, fungi pieces and mixtures thereof. Taste imparting components, savoury taste enhancers and fat can be added in the amounts as described above under "other ingredients". For example, the taste imparting components may be added in an amount of from 1 to 30 wt%, based on the weight of the total resulting food concentrate. The savoury taste enhancer may be added in an amount of from 0.1 to 30 wt%, preferably from 0.5 to 20 wt%, most preferably from 1 to 10 wt% based on the weight of the total resulting food concentrate.
Fat may be added in an amount of below 15 wt%, more preferably below 10 wt%, based on the weight of the resulting concentrate food concentrate.

Savoury taste enhancer, taste imparting components and fat (which are not major sources of calcium or salts) are preferably added during step a) or after step a) and preferably before solidification step f). Preferably, this step is carried out during or after step b).

### g) packaging

In step g) the mixture comprising water, gelling pectin, sodium salt, optionally potassium salt and possibly taste imparting ingredients and/or savoury taste enhancer is packaged. The mixture may further comprise calcium salt. The mixture may be in liquid form and is transferred, preferably by pouring, to a packaging, such as a tub, preferably followed by closure by a lid or a seal. A package preferably is a package selected from the group consisting of a tub, a cup, a jar, a doy pack and a stick pack. Packaging step g) is preferably carried out after addition of calcium salt, i.e. after step f), but may be carried out after addition of non-gelatinised starch (step d) and after addition of sodium salt and optionally potassium salt (step e) have been carried out, when calcium is not present yet. In that case, calcium salt may be added to the mixture, when this is in a packaging, preferably followed by closure of the packaging e.g. by a lid or a seal.

### h) solidification

In step h), the mixture is allowed to solidify. It is allowed to set to a gel. Solidification preferably comprises gellification of the mixture. Solidification of the mixture comprising water, gelling pectin and salt preferably comprises cooling, preferably up to a temperature of the mixture of between 0 °C and 60 °C, preferably of between 5 °C and 55 °C, most preferably of between 10 °C and 40 °C. Solidification preferably takes place after the packaging step, i.e. after step h). In this case, the concentrate food composition is set to a gel texture in the packaging. Solidification preferably is occurring relatively fast, preferably instantaneously. This results in an efficient production process, less spoilage on the lid or seal of the packaging, less sedimentation or floating of possible particulate material and making an expensive and energy consuming cooling device in the production machinery not necessary.
It is an advantage of the present invention that the solidification of the gel is determined by the moment of adding calcium salt. This results in a production process which can be better controlled to the requirements of the producer. There is control over the moment of solidification and the temperature of solidification. This results in a system with more flexibility during formulation, e.g. addition of non-gelatinised starch, A relatively fast solidification after addition of the calcium salt can be obtained during production of the food concentrates, preferably the solidification time is less than 5 hours, more preferably less than 3 hours, even more preferably less than 2 hours, even more preferably less than 1 hour, most preferably less than 30 minutes.
Hence, preferably the invention relates to a process comprising the steps of :
a) Providing a mixture comprising water and gelling pectin, gelling pectin being all pectin with a degree of esterification of below 55%, wherein the gelling pectin is dissolvable in water,
b) Heating the mixture resulting from step a),
c) Cooling or allowing the mixture to cool to a temperature below the onset temperature for gelatinisation of the non-gelatinised starch in the environment of the mixture to which the non-gelatinised starch is added.
d) Adding the non-gelatinised starch after step c),
e) Adding sodium salt and optionally potassium salt preferably during or after step b).
f) Adding calcium salt to the mixture during or after step d) or step e), most preferably during step d),
g) Packaging the mixture after step e) and f) have been completed,
h) Allowing the mixture to solidify,
to result in a packaged food concentrate in the form of a gel.

### Use

In a further aspect the present invention relates to the use of the packaged concentrate of the present invention to prepare a soup, a sauce, a gravy, or a seasoned dish. Preferably, the invention relates to the use of the packaged concentrate of the present invention to prepare a sauce or a gravy.
At least part of the packaged concentrate in the form of a gel is removed from its packaging and is preferably mixed with a liquid and dispersed in it. If preferred, the concentrate of the present invention can be added to a pan directly with sufficient amount of water, after which optional other ingredients required for the soup, sauce or gravy can be added. Preferably, the temperature of the hot liquid or dish (if a seasoned dish is desired) is between 70 °C and 95 °C, more preferably of between 75 °C and 90 °C. During dispersing, but preferably after dispersing, the mix of the concentrate of the present invention and the aqueous liquid is preferably heated or heating is continued to cook-up the mixture. Continuous heating improves dispersion of the concentrate in the form of a gel and induces the viscosity increase as a consequence of gelatinization of the starch. It might be preferred that the concentrate in the form of a gel is first dispersed in the aqueous liquid, preferably in water, of a temperature of below 95 °C, before cooking up. Cooking up is preferred to achieve the final viscosity. An optimal preparation mode is dependent on the type of gelling agent used, on the gel strength, the exchange surface area between gel and the aqueous liquid, on the gelatinisation temperature of the starch, and on further starch characteristics of the starch which is used. However, it is in the art of a skilled artisan to find out what the optimal temperature and heating time is for a specific food concentrate. A preferred cooking time may be between 20 seconds and 5 minutes, preferably between 30 seconds and 3 minutes, more preferably between 45 seconds and 2 minutes.

In case of a hot pour-over application, like a viscous sauce or a gravy, a starch with a gelatinisation temperature of much less than 100 °C is preferred, like for example native potato starch. A person of average skill is able to optimize the food concentrate depending on the preferred preparation mode or preparation requirements or the desired application for the consumer.

Hence, preferably the present invention relates to a process to provide a liquid ready-to-eat food product, comprising the steps of:
a) providing a packaged food concentrate of the present invention,
b) removing at least part of the packaged food concentrate from its packaging,
c) dispersing at least part of the food concentrate in an aqueous liquid, to result in a mixture,
d) heating the mixture resulting from step c) at a temperature higher than the gelatinisation temperature of the starch, achieving a viscosity increase of the mixture,
to result in a liquid ready to eat food product.

In a further aspect, the present invention relates to a ready-to-eat food product obtainable by the process as described above.

The concentrate according to the present invention is preferably diluted in liquid in a ratio of between 2 to 40 times, preferably of between 3 and 20 times, more preferably of between 4 and 10 times, based on the weight of the concentrate.

The viscosity of the ready-to-eat product resulting after dilution and cooking up of the concentrate according to the invention is preferably higher than 20 mPa.s, more preferably higher than 40 mPa.s, even more preferably higher than 50 mPa.s, most preferably higher than 60 mPa.s and is preferably lower than 350 mPa.s, more preferably lower than 250 mPa.s, even more preferably lower than 200 mPa.s, and most preferably lower than 150 mPa.s and can be preferably between 20 and 350 mPa.s, more preferably between 40 and 250 mPa.s, even more preferably between 50 and 200 mPa.s, and most preferably between 50 and 150 mPa.s. The salt content of the diluted product is preferably in the range of from 5 to 17 g/liter, more preferably of from 7 to 15 g/liter most preferably of from 8 to 13 g/liter.
The starch content of the diluted product is preferably in the range of from 10 to 50 g/liter, more preferably of from 15 to 40 g/liter most preferably of from 20 to 40 g/liter.

Preferably, the food concentrate of the present invention results after dilution in an aqueous liquid of 2 to 40 times, preferably of between 3 and 20 times, more preferably of between 4 and 10 times dilution in a ready to eat food product showing a salt content which is preferably of from 5 to17 g/liter, more preferably of from 7 to 15 g/liter and most preferably of from 8 to 13 g/liter, and a starch content of preferably from 10 to 50 g/liter, more preferably of from 15 to 40 g/liter, most preferably of from 20 to 40 g/liter.

### Protocol viscosity measurement:

- Samples are dispersed (e.g. 10x dilution) in water at a temperature of 50 °C, while stirring, then heated to 99 °C (within e.g. 3 min) than kept at 99 °C for 3 min, or until complete dispersion.
- The solutions are transferred into a rheometer (for example, MCR300 or MCR 301 Physica, Anton Paar) pre-heated at 90-85 °C and equipped with a profiled cylinder and bob.
- The shear rate is set to 30/s throughout the experiment.
- The temperature is kept at 75 °C for 2 minutes, the solution is cooled to 20 °C at 2 °C/min and kept for 2 minutes at 20 °C.
- Then the viscosities are read at, for example 70 °C and 50 °C are expressed in mPa.s.

### Advantages

It was surprisingly found that the addition of very large amounts of non-gelatinised starch with a range of gelatinisation temperatures was possible in a high salt environment. This was not possible with the production processes described for several gelling agents in the art of savoury concentrates. In this way a food concentrate can be produced in the form of a gel in a fast and efficient manner which provide thickening upon dilution in hot water.
The present invention further provided a concentrate food composition wherein, without additional gums, no undesired sedimentation or floating of particulate matter was observed during production..

### Examples

The present invention is exemplified by the following examples:

### Example 1: Gelled food concentrate with 20% non-gelatinised corn starch

Process:
- Water and pectin powder were mixed in a Thermomix (Vorwerk, Germany)
- The mixture was heated to 90 °and kept at this temperature for 5 min
- Half of the salt mixture (NaCl + KCl) was added
- The mixture was cooled to 50 °C
- A pre-mix with the savoury mix, remaining salt mixture, starch and calcium salt was added
- The mixture was stirred until homogeneous, for 5 min
- The mixture was filled into containers and cooled to solidify
- The Firmness was measured according to the protocol as described in the description.

| | %wt |
|---|---|
| Savoury mix | 19.0% |
| Salt Mixture (~70% NaCl, 30% KCI) | 10.0% |
| Corn starch | 19.9% |
| Water | 49.2% |
| CaCl₂.2H₂O | 0.3% |
| Pectin powder (LC 810, Danisco) | 1.6% |
| Total | 100.0% |
| | |
| Firmness (g) | 49 |

| | |
|---|---|
| ^{a)} *LC 810 (Danisco average DE typically 37, contains gelling pectin*)*, contains ~62% galacturonic acid (GalA).* ^{(b)} Savoury mix contains sugar, yeast extract, meat powder base, parsley, pepper, flavours. Contains approximately 19% NaCl. | |

### Results

A shape-stable gel resulted with a glossy appearance and a good spoonability. The salt level was about 25% on total water content. No sedimentation or floating of particles and savoury ingredients was observed (homogeneous composition). The production process was easy and starch could be added without any complication due to undesired thickening of the ingredient mixture..

### Example 2: Gelled gravy concentrate with 25% non-gelatinised corn starch

Process:
- Water and pectin powder were mixed in a Thermomix (Vorwerk, Germany)
- The mixture was heated to 90 °and kept at this temperature for 5 min
- The mixture was cooled to 50 °C
- A pre-mix with the savoury mix, salt mixture (NaCI, KCI), starch and calcium salt was added
- The mixture was stirred until homogeneous, for 5 min
- The mixture was filled into containers and cooled to solidify
- The Firmness and viscosity after dilution was measured according to the protocol as described in the description.

| | %wt |
|---|---|
| Savoury mix | 19.9% |
| Salt mixture (~70% NaCl, 30% KCl) | 10.0% |
| Corn starch | 24.9% |
| Water | 42.9% |
| CaCl₂.2H₂O | 0.4% |
| Pectin powder (LC 810, Danisco) | 1.9% |
| | 100% |
| | |
| Firmness (in g) | 137 |
| Viscosity after dilution, at 50 °C) (in mPa.s) *Dilution: 28g in 250g water* | 41 |

| | |
|---|---|
| ^{a)} *LC 810 (Danisco average DE typically 37, contains gelling pectin), contains ~62% galacturonic acid (GaIA).* ^{(b)} Savoury mix contains sugar, yeast extract, meat powder base, parsley, pepper, flavours. Contains approximately 19% NaCI. | |

### Result:

The food concentrate could be obtained in a easy production process, the large amount of starch could be added without complications such as undesired severe thickening in the mixture. The salt level was about 25% on total water content. A shape stable gel was obtained which provided a good spoonability. It was noticed that much stronger gels were obtained when sodium salt +potassium salt were used,
compared to the situation when only sodium salt was used (see example 6), this was even the case despite a less pectin was used. The food concentrate was homogenous, no sedimentation or floating of particles and savoury ingredients was observed. After dilution and cooking up, a gravy was obtained with a nice viscosity as desired for a gravy.

### Example 3: Gelled Gravy concentrate with 30% non-gelatinised tapioca starch

- Water and pectin powder were mixed in a Thermomix (Vorwerk, Germany)
- The mixture was heated to 90 °and kept at this temperature for 5 min
- The mixture was cooled to 45 °C
- A pre-mix with the savoury mix, salt mixture (NaCI, KCI) was added
- A pre-mix of starch and calcium salt was added
- The mixture was stirred until homogeneous, for 5 min
- The mixture was filled into containers and cooled to solidify
- Firmness and viscosity after dilution was measured according to the protocol described in the description.

| | %wt |
|---|---|
| Added Water | 40.4% |
| Tapioca starch | 29.9% |
| Savoury mix | 18.9% |
| Salt mixture (~70% NaCl, 30% KCl) | 8.6% |
| Pectin powder (LC 810, Danisco) | 1.8% |
| CaCl₂.2H₂O | 0.4% |
| Total | 100% |
| | |
| Firmness (in g) | 213 |
| Viscosity after dilution, at 50 °C) (in mPa.s) *Dilution: 28g in 250g water* | 112 |

| | |
|---|---|
| ^{a)} *LC 810 (Danisco average DE typically 37, contains gelling pectin), contains ~62% galacturonic acid (GaIA).* ^{(b)} Savoury mix contains sugar, yeast extract, meat powder base, parsley, pepper, flavours. Contains approximately 19% NaCI. | |

### Result

The food concentrate in the form of a gel was obtained in a fast and efficient way and the large amount of starch could be added without severe viscosity increase formation. The total salt level was about 25% on water content. The resulting gel was a shape stable gel and had a good spoonability. A homogenous product was obtained and no sedimentation or floating of particles and savoury ingredients was observed. After dilution in hot water, the food concentrate provided enough viscosity for a gravy or sauce application.

### Example 4: Gelled gravy concentrate with 25% non-gelatinised tapioca starch Process: same as in example 3

| | %wt |
|---|---|
| Water | 42.7% |
| Tapioca Starch | 24.9% |
| Savoury mix | 19.9% |
| NaCl | 10.0% |
| Pectin powder (LC 810, Danisco) | 2.1% |
| CaCl₂.2H₂O | 0.4% |
| | 100% |
| | |
| Firmness (in g) | 43 |
| Viscosity after dilution, at 50 °C) (in mPa.s) *Dilution: 28g in 250g water* | 66 |

| | |
|---|---|
| ^{*a*)} *LC 810 (Danisco average DE typically 37, contains gelling pectin), contains ~62% galacturonic acid (GalA).* ^{(b)} Savoury mix contains sugar, yeast extract, meat powder base, parsley, pepper, flavours. Contains approximately 19% NaCI. | |

### Result

A gravy concentrate was obtained with 25% of tapioca starch and the gel structure was maintained. The salt level was about 25% on total water content. Addition of the starch was easy and smooth. No sedimentation or floating of particles and savoury ingredients was observed (homogeneous compostion).

### Example 5: Gelled gravy concentrate with 23% non-gelatinised potato starch.

- Water and pectin powder were mixed in a Thermomix (Vorwerk, Germany)
- The mixture was heated to 90 °and kept at this temperature for 5 min
- The mixture was cooled to 70°C
- Beef fat and beef broth were added
- A pre-mix with all the remaining ingredients, except starch and calcium salt was added
- The mixture was then cooled to 35 °C
- A pre-mix of starch and calcium salt was added
- The mixture was stirred until homogeneous, for 5 min
- The mixture was filled into containers for further measurements and cooled to solidify

| | %wt |
|---|---|
| Added Water | 39.8% |
| Savoury mix | 19.0% |
| Potato starch | 23.0% |
| Salt mixture (85% NaCl, 15% KCl) | 9.7% |
| Beef Broth 65% brix | 3.0% |
| Beef Fat | 3.0% |
| Pectin powder (LC 810, Danisco) | 2.1% |
| CaCl₂.2H₂O | 0.4% |
| Total | 100% |
| | |
| Firmness (in g) | 68 |
| Viscosity after dilution, at 50 °C) (in mPa.s) *Dilution: 28g in 250g water* | 44 |

| | |
|---|---|
| ^{a)} *LC 810 (Danisco average DE typically 37, contains gelling pectin), contains ~62% galacturonic acid (GaIA).* Savoury mix contains: sucrose, meat powder, yeast extract, onion powder, beef flavouring, paprika powder, herbs. Contains approximately 15% NaCI. | |

### Result

A gravy concentrate in the form of a gel was obtained which comprised 23% of potato starch (added). The ingredient mixture was easy to process and the large amount of starch could be added without complications such as undesired thickening or loss of the gel structure. The concentrate had a good spoonability. It was a homogenous food concentrate, no sedimentation or floating of particles and savoury ingredients was observed.

### Example 6: Gelled Gravy concentrate with 25% non-gelatinised corn starch added

Process:
- Water and pectin powder were mixed in a Thermomix (Vorwerk, Germany)
- The mixture was heated to 90 °and kept at this temperature for 5 min
- The mixture was cooled to 50 °C
- A pre-mix with all the remaining ingredients, except starch and calcium salt was added
- A pre-mix of starch and calcium salt was added
- The mixture was stirred until homogeneous, for 5 min
- The mixture was filled into containers for further measurements and cooled to solidify

| | %wt |
|---|---|
| Savoury mix | 18.8% |
| NaCl | 9.5% |
| Corn starch | 25.0% |
| Water | 44.2% |
| CaCl₂.2H₂O | 0.4% |
| Pectin powder (LC 810, Danisco) | 2.1% |
| | 100.0% |
| | |
| Firmness (in g) | 42 |
| Viscosity after dilution, at 50 °C) (in mPa.s) *Dilution: 28g in 250g water* | 28 |

| | |
|---|---|
| ^{a)} *LC 810 (Danisco average DE typically 37, contains gelling pectin), contains ~62% galacturonic acid (GaIA).* ^{(b)} Savoury mix contains sugar, yeast extract, meat powder base, parsley, pepper, flavours. Contains approximately 19% NaCl. | |

A shape stable gel was produced comprising 25% of added corn starch. The salt level was about 25% on total water content. The process was easy and the large amount of starch could be added without complications. The spoonability of the gel was good. No sedimentation or floating of particles and savoury ingredients was observed during production, the food concentrate was homogenous. After cooking-up, the product provided

## Claims

1. A packaged food concentrate in the form of a gel, comprising
• Water,
• Sodium salt and optionally potassium salt in a total amount of from 5 wt% to 40 wt%, based on the total water content, and calculated as (weight of salt / (weight of salt + weight of total water content))*100%,
• Gelling pectin, being all pectin with a DE below 55%, wherein gelling pectin is dissolved in the water,
• Calcium salt,
• Non-gelatinised starch.

2. Packaged food concentrate according to claim 1, wherein water is present in a total amount of from 30 to 70 wt%.

3. Packaged food concentrate according to any one of the preceding claims wherein the non-gelatinised starch is present in an amount of from 10 wt% to 50 wt%, based on the weight of the total food concentrate.

4. Packaged food concentrate according to any one of the preceding claims wherein the weight ratio of non-gelatinised starch to salt is from 0.8:1 to 10:1, preferably from 1.5:1 to 6:1.

5. Packaged food concentrate according to any one of the preceding claims wherein potassium salt, preferably KCI, is present in an amount of from 0.6 to 20 wt%, based on the total water content of the food concentrate, and calculated as (weight of salt / (weight of salt + weight of total water content))*100%, and Na⁺ ions and K⁺ ions are present in a ratio of [(Na⁺/(Na⁺+K⁺))*100] of from 15 wt% to 95 wt%.

6. Packaged food concentrate according to any one of the preceding claims, wherein the food concentrate comprises Ca²⁺ ions in an amount of from 0.01 to 3 wt%, based on the weight of the total water content of the food concentrate.

7. Packaged food concentrate according to any one of the preceding claims, wherein the food concentrate is a food concentrate for preparing a soup, a sauce, a gravy or a seasoned dish, preferably for a gravy.

8. Packaged food concentrate according to any one of the preceding claims, wherein the food concentrate further comprises at least one of the group consisting of monosodium glutamate, 5'-ribonucleotides, organic acid and mixtures thereof.

9. Packaged food concentrate according to any one of the preceding claims, wherein the food concentrate further comprises particulates selected from the group consisting of vegetable pieces, fruit pieces, herb pieces, meat pieces, fungi pieces an mixtures thereof.

10. Packaged food concentrate according to any one of the preceding claims, wherein 25 gram of the food concentrate disperses in 250 ml water of 80°C in less than 4 minutes, using stirring.

11. Packaged food concentrate according to any one of the preceding claims, having a firmness (in g) of higher than 25 g, preferably higher than 30 g.

12. Packaged food concentrate according to any one of the preceding claims, wherein dilution of the food concentrate in water, in a ratio of from 1:2 to 1:40, more preferably of from 1:3 to 1:20 results after preparation in a ready-to-eat product with a viscosity of between 20 and 350 mPa.s.

13. Process to prepare a packaged food concentrate in the form of a gel according to any one of the preceding claims, the process comprising the steps of :
a) Providing a mixture comprising water and gelling pectin, gelling pectin being all pectin with a degree of esterification of below 55%, wherein the gelling pectin is dissolvable in water,
b) Heating the mixture,
c) Cooling or allowing the mixture to cool to a temperature below the onset temperature for gelatinisation of the non-gelatinised starch in the environment of the mixture to which the non-gelatinised starch is added.
d) Adding the non-gelatinised starch after step c),
e) Adding sodium salt and optionally potassium salt,
f) Adding calcium salt,
g) Packaging,
h) Allowing the mixture to solidify,
to result in a packaged food concentrate in the form of a gel.

14. Process according to claim 13, wherein the calcium salt is added during or after adding the non-gelatinised starch.

15. Use of the concentrate food composition according to anyone of the claims 1 to 12 for preparing a soup, a sauce, a gravy or a seasoned dish, preferably for preparing a gravy.

## Patentansprüche

1. Verpacktes Lebensmittelkonzentrat in der Form eines Gels, umfassend
• Wasser
• Natriumsalz und wahlweise Kaliumsalz in einer gesamten Menge von 5 Gew.-% bis 40 Gew.-% bezogen auf den gesamten Wassergehalt, und berechnet als (Gewicht von Salz / (Gewicht von Salz + Gewicht des gesamten Wassergehaltes))*100%,
• gelierendes Pektin, das alles ein Pektin mit einem DE unter 55% ist, wobei gelierendes Pektin in Wasser gelöst ist,
• Calciumsalz,
• nicht verkleisterte Stärke.

2. Verpacktes Lebensmittelkonzentrat gemäß Anspruch 1, wobei Wasser in einer gesamten Menge von 30 bis 70 Gew.-% vorhanden ist.

3. Verpacktes Lebensmittelkonzentrat gemäß irgendeinem der vorhergehenden Ansprüche, wobei die nicht verkleisterte Stärke in einer Menge von 10 bis 50 Gew.-%, bezogen auf das Gewicht des gesamten Lebensmittelkonzentrates vorhanden ist.

4. Verpacktes Lebensmittelkonzentrat gemäß irgendeinem der vorhergehenden Ansprüche, wobei das Gewichtsverhältnis von nicht verkleisterter Stärke zu Salz 0,8:1 bis 10:1, vorzugsweise 1,5:1 bis 6:1 beträgt.

5. Verpacktes Lebensmittelkonzentrat gemäß irgendeinem der vorhergehenden Ansprüche, wobei Kaliumsalz, vorzugsweise KCI, in einer Menge von 0,6 bis 20 Gew.-%, bezogen auf den gesamten Wassergehalt des Lebensmittelkonzentrates, und berechnet als (Gewicht des Salzes / (Gewicht des Salzes + Gewicht des gesamten Wassergehalts))*100% vorhanden ist, und Na⁺-Ionen und K⁺-Ionen in einem Verhältnis von [(Na⁺ / (Na⁺ + K⁺))*100] von 15 Gew.-% bis 95 Gew.-% vorhanden sind.

6. Verpacktes Lebensmittelkonzentrat gemäß irgendeinem der vorhergehenden Ansprüche, wobei das Lebensmittelkonzentrat Ca²⁺-lonen in einer Menge von 0,01 bis 3 Gew.-%, bezogen auf das Gewicht des gesamten Wassergehalts des Lebensmittelkonzentrates umfasst.

7. Verpacktes Lebensmittelkonzentrat gemäß irgendeinem der vorhergehenden Ansprüche, wobei das Lebensmittelkonzentrat ein Lebensmittelkonzentrat zur Herstellung einer Suppe, einer Sauce, eines Bratenfonds oder eines gewürzten Gerichtes ist, vorzugsweise für einen Bratenfonds.

8. Verpacktes Lebensmittelkonzentrat gemäß irgendeinem der vorhergehenden Ansprüche, wobei das Lebensmittelkonzentrat ferner mindestens eines aus der Gruppe bestehend aus Mononatriumglutamat, 5'-Ribonucleotiden, organischer Säure und Mischungen davon umfasst.

9. Verpacktes Lebensmittelkonzentrat gemäß irgendeinem der vorhergehenden Ansprüche, wobei das Lebensmittelkonzentrat ferner teilchenförmiges Material ausgewählt aus der Gruppe besteht aus Gemüsestücken, Fruchtstücken, Kräuterstücken, Fleischstücken, Pilzstücken und Mischungen davon umfasst.

10. Verpacktes Lebensmittelkonzentrat gemäß irgendeinem der vorhergehenden Ansprüche, wobei 25 Gramm des Lebensmittelkonzentrates sich in 250 ml Wasser von 80°C in weniger als 4 Minuten unter Rühren lösen

11. Verpacktes Lebensmittelkonzentrat gemäß irgendeinem der vorhergehenden Ansprüche, mit einer Festigkeit (in g) von höher als 25 g, vorzugsweise höher als 30 g.

12. Verpacktes Lebensmittelkonzentrat gemäß irgendeinem der vorhergehenden Ansprüche, wobei Verdünnen des Lebensmittelkonzentrates in Wasser in einem Verhältnis von 1:2 bis 1:40, bevorzugter von 1:3 bis 1:20, nach der Herstellung in einem essfertigen Produkt mit einer Viskosität von zwischen 20 und 350 mPa.s resultiert.

13. Verfahren zur Herstellung eines verpackten Lebensmittelkonzentrates in der Form eines Gels gemäß irgendeinem der vorhergehenden Ansprüche, wobei das Verfahren die Schritte umfasst von:
a) Bereitstellen einer Mischung umfassend Wasser und gelierendes Pektin, wobei das gelierende Pektin alles Pektin mit einem Grad der Veresterung von unter 55% ist und wobei das gelierende Pektin in Wasser löslich ist,
b) Erwärmen der Mischung,
c) Abkühlen oder Abkühlen lassen der Mischung zu einer Temperatur unterhalb der Anfangstemperatur für die Verkleisterung der nicht verkleisterten Stärke in der Umwelt der Mischung, welcher die nicht verkleisterte Stärke zugesetzt werden wird,
d) Zusetzen der nicht verkleisterten Stärke nach Schritt c),
e) Zusetzen von Natriumsalz und wahlweise Kaliumsalz,
f) Zusetzen von Calciumsalz
g) Verpacken,
h) die Mischung fest werden lassen,
um ein verpacktes Lebensmittelkonzentrat in der Form eines Gels zu ergeben.

14. Verfahren gemäß Anspruch 13, wobei das Calciumsalz während oder nach dem Zusetzen der nicht verkleisterten Stärke zugesetzt wird.

15. Verwendung der konzentrierten Lebensmittelzusammensetzung gemäß irgendeinem der Ansprüche 1 bis 12 zur Herstellung einer Suppe, einer Sauce, eines Bratenfonds oder eines gewürzten Gerichtes, vorzugsweise zur Herstellung eines Bratenfonds.

## Revendications

1. Concentré alimentaire emballé dans la forme d'un gel, comprenant
• de l'eau,
• un sel de sodium et éventuellement un sel de potassium dans une quantité totale de 5 % en poids à 40 % en poids, rapporté au contenu total en eau, et calculé comme (masse de sel/(masse de sel + masse de contenu total en eau))* 100 %,
• de la pectine gélifiante, étant toute pectine avec un DE inférieur à 55 %, dans lequel la pectine gélifiante est dissoute dans l'eau,
• un sel de calcium,
• de l'amidon non-gélatinisé.

2. Concentré alimentaire emballé selon la revendication 1, dans lequel de l'eau est présente dans une quantité totale de 30 à 70 % en poids.

3. Concentré alimentaire emballé selon l'une quelconque des revendications précédentes, dans lequel l'amidon non-gélatinisé est présent dans une quantité de 10 % en poids à 50 % en poids rapporté au poids du concentré alimentaire total.

4. Concentré alimentaire emballé selon l'une quelconque des revendications précédentes, dans lequel le rapport massique de l'amidon non-gélatinisé au sel est de 0,8:1 à 10:1, de préférence de 1,5:1 à 6:1.

5. Concentré alimentaire emballé selon l'une quelconque des revendications précédentes, dans lequel un sel de potassium, de préférence KCI, est présent dans une quantité de 0,6 à 20 % en poids rapporté au contenu total en eau du concentré alimentaire, et calculé comme (masse de sel/(masse de sel + masse de contenu total en eau))*100 %, et des ions Na⁺ et des ions K⁺ sont présents dans un rapport de [(Na⁺/(Na⁺ + K⁺))*100] de 15 % en poids à 95 % en poids.

6. Concentré alimentaire emballé selon l'une quelconque des revendications précédentes, dans lequel le concentré alimentaire comprend des ions Ca²⁺ dans une quantité de 0,01 à 3 % en poids, rapporté à la masse du contenu total en eau du concentré alimentaire.

7. Concentré alimentaire emballé selon l'une quelconque des revendications précédentes, dans lequel le concentré alimentaire est un concentré alimentaire pour préparer une soupe, une sauce, un jus ou un plat assaisonné, de préférence pour un jus.

8. Concentré alimentaire emballé selon l'une quelconque des revendications précédentes, dans lequel le concentré alimentaire comprend de plus au moins un du groupe constitué de glutamate de monosodium, de 5'-ribonucléotides, d'acide organique et de mélanges de ceux-ci.

9. Concentré alimentaire emballé selon l'une quelconque des revendications précédentes, dans lequel le concentré alimentaire comprend de plus des matières particulaires choisies dans le groupe constitué de morceaux de légumes, de morceaux de fruits, de morceaux d'herbes, de morceaux de viandes, de morceaux de champignons, et de mélanges de ceux-ci.

10. Concentré alimentaire emballé selon l'une quelconque des revendications précédentes, dans lequel 25 grammes du concentré alimentaire se dispersent dans 250 ml d'eau à 80°C en moins de 4 minutes, en utilisant une agitation.

11. Concentré alimentaire emballé selon l'une quelconque des revendications précédentes, présentant une résistance mécanique (en g) supérieure à 25 g, de préférence supérieure à 30 g.

12. Concentré alimentaire emballé selon l'une quelconque des revendications précédentes, dans lequel une dilution du concentré alimentaire dans l'eau, dans un rapport de 1:2 à 1:40, encore mieux de 1:3 à 1:20 résulte après préparation en un produit prêt à être consommé avec une viscosité de 20 à 350 mPa.s

13. Procédé de préparation d'un concentré alimentaire emballé dans la forme d'un gel selon l'une quelconque des revendications précédentes, le procédé comprenant les étapes consistant :
a) à fournir un mélange comprenant de l'eau et une pectine gélifiante, la pectine gélifiante étant toute pectine avec un degré d'estérification inférieur à 55 %, dans lequel la pectine gélifiante peut être dissoute dans de l'eau,
b) à chauffer le mélange,
c) à refroidir ou à laisser le mélange refroidir jusqu'à une température inférieure à la température de démarrage pour la gélatinisation de l'amidon non-gélatinisé dans l'environnement du mélange auquel l'amidon non-gélatinisé est ajouté.
d) à ajouter l'amidon non-gélatinisé après l'étape c),
e) à ajouter un sel de sodium et éventuellement un sel de potassium,
f) à ajouter un sel de calcium,
g) à emballer,
h) à laisser le mélange solidifier,
pour résulter en un concentré alimentaire emballé dans la forme d'un gel.

14. Procédé selon la revendication 13, dans lequel le sel de calcium est ajouté pendant ou après l'addition de l'amidon non-gélatinisé.

15. Utilisation de la composition alimentaire concentrée selon l'une quelconque des revendications 1 à 12 pour préparer une soupe, une sauce, un jus ou un plat assaisonné, de préférence pour préparer un jus.
